# FASCICULE DE BREVET EUROPEEN

(11) **EP 3 416 080 B1**
(45) Date de publication et mention de la délivrance du brevet: **23.03.2022**
(21) Numéro de dépôt: 18177279.9
(22) Date de dépôt: 12.06.2018
(51) Int. Cl.: G06F 21/32, H04W 12/06, H04L 29/06

(54) **ASSISTANCE À LA VÉRIFICATION DU PARCOURS D'UN IMMIGRÉ À L'ARRIVÉE DANS UN PAYS D'ACCUEIL**
ASSISTENZSYSTEM ZUR ÜBERPRÜFUNG EINER FLÜCHTLINGSROUTE VOR DER ANKUNFT IN EINEM GASTLAND
ASSISTANCE IN VERIFYING A MIGRANT TRIP PRIOR TO ARRIVING IN A HOST COUNTRY

(30) Priorité: 13.06.2017 FR 1755312
(43) Date de publication de la demande: 19.12.2018
(73) Titulaire: Idemia Identity & Security France, 92400 Courbevoie (FR)
(72) Inventeur: TOURET, Olivier, 92130 ISSY-LES-MOULINEAUX (FR); CHASTEL, Pierre, 92130 ISSY-LES-MOULINEAUX (FR); CHABANNE, Hervé, 92130 ISSY-LES-MOULINEAUX (FR)
(74) Mandataire: Chauvin, Karen Laurence

(56) Documents cités:
- US-A1- 2016 342 851
- Jens-Martin Loebel: "Is Privacy Dead? - An Inquiry into GPS-Based Geolocation and Facial Recognition Systems" In: "IFIP Advances in Information and Communication Technology", 1 janvier 2012 (2012-01-01), XP055461027, ISSN: 1868-4238 vol. 386, pages 338-348, DOI: 10.1007/978-3-642-33332-3_31, * page 338, alinéa Abstract - page 338, alinéa Abstract * * page 341, alinéa 2.2 - page 345, alinéa 4.1 *
- Anonymous: "astronomy - Given a photo of the Moon, taken from Earth, is it possible to calculate the position of the photographer's site? - Physics Stack Exchange", , 2 décembre 2015 (2015-12-02), XP055461088, Extrait de l'Internet: URL:https://physics.stackexchange.com/ques tions/25968/given-a-photo-of-the-moon-take n-from-earth-is-it-possible-to-calculate-t he-pos [extrait le 2018-03-20]
- Anonymous: "Examination of Apollo Moon photographs - Wikipedia", , 14 avril 2017 (2017-04-14), XP055461106, Extrait de l'Internet: URL:https://en.wikipedia.org/w/index.php?t itle=Examination_of_Apollo_Moon_photograph s&oldid=775319524 [extrait le 2018-03-20]
- Anonymous: "Google knows where your photos were taken - Naked Security", , 29 février 2016 (2016-02-29), XP055461373, Extrait de l'Internet: URL:https://nakedsecurity.sophos.com/2016/ 02/29/google-knows-where-your-photos-were- taken/ [extrait le 2018-03-21]

## Description

### DOMAINE TECHNIQUE GÉNÉRAL ET ART ANTÉRIEUR

Les populations migrantes représentent, en volume et à ce jour, la troisième population mondiale.

Les causes des migrations sont pour l'essentiel politiques ou économiques.

Sous conditions, ces populations souvent démunies peuvent se voir accorder dans certains pays des droits personnalisés. Typiquement, en France, le statut de réfugié donne l'accès à un titre de séjour valable sur plusieurs années, ainsi qu'à différentes prestations d'accompagnement.

Classiquement, l'organisme qui statue sur l'éligibilité d'une personne instruit un dossier relatif à l'historique de celle-ci.

Ce dossier doit permettre de reconstituer tout ou partie du parcours de la personne qui demande à bénéficier du statut de réfugié et de corroborer sa présence physique en des lieux et à des dates donnés.

Or, compte tenu des conditions matérielles extrêmement difficiles de la migration et des conditions de vie antérieure, il s'avère souvent très difficile voire impossible pour la personne concernée de constituer ce dossier de preuves et pour l'entité de mesurer l'intégrité de ce dossier, et ce dans un délai raisonnable.

Il en résulte de nombreux problèmes :
1. Des investigations couteuses, pénibles et faillibles à base d'entretiens éprouvants ;
2. Un climat de suspicion envers les demandeurs, lié à des possibilités de fraude ;
3. Des délais d'instruction pouvant s'étaler sur plusieurs mois, voire années ;
4. Une situation angoissante et précaire pendant la durée de l'instruction ;
5. Une pression politique grandissante.

Le document de Jens-Martin Loebel: "Is Privacy Dead? - An Inquiry into GPS-Based Geolocation and Facial Récognition Systems" in "IFIP Advances in Information and Communication Technology", du 1 janvier 2012 (2012-01-01), ISSN: 1868-4238 vol. 386, pages 338-348 présente la reconstruction du trajet d'utilisateurs à l'aide d'images provenant de réseaux sociaux où la localisation de l'acquisition est taguée (coordonnées GPS), et en reconnaissant les visages des utilisateurs de façon automatique sur ces photos.

Le document "Examination of Apollo Moon photographs - Wikipedia", du 14 avril 2017 (2017-04-14), XP055461106, extrait de l'Internet: https://en.wikipedia.org/w/index.php? title=Examination_of_Apollo_Moon_photographs&oldid=775319524 démontre comment la position des étoiles peut-être utilisée pour confirmer la localisation de l'acquisition d'une photo de la mission Apollo.

De même, le document "Google knows where your photos were taken - Naked Security", du 29 février 2016 (2016-02-29), XP055461373, extrait de l'Internet https:// nakedsecurity.sophos.com/2016/02/29/google-knows-where-your-photos-were-taken/ présente un projet Google: "Planet" utilise l'intelligence artificielle pour localiser l'acquisition de photos, en utilisant les attractions touristiques ou les détails architecturaux présents sur ces photos.

Le document CN 204 155 323 U (GUILIN CHIXUN TECHNOLOGY CO LTD) du 11 février 2015 (2015-02-11) présente un système vérifiant les patrouilles de personnel de sécurité en utilisant une acquisition biométrique de leurs iris photographiées et les coordonnées GPS des photos.

Le document EP 3 256 976 A1 (UNITED SERVICES AUTOMOBILE ASS (USAA) [US]) 20 décembre 2017 (2017-12-20) présente une méthode d'authentification des visages d'utilisateur de distributeur automatique de billet, vérifiant la localisation de l'acquisition de la photographie à l'aide de l'arrière plan attendu (le distributeur étant fixe).

### PRÉSENTATION GÉNÉRALE DE L'INVENTION

L'invention est décrite dans les revendications indépendantes attachées. Les revendications dépendantes donnent des modes de réalisation. Les exemples donnés dans cette description étant hors de la portée des revendications indépendantes ne décrivent pas l'invention.

Un but de l'invention est de proposer une solution permettant de façon simple et sécurisée de vérifier le parcours antérieur d'une personne demandant l'accès à un statut et à des droits personnalisés dans un pays d'accueil.

Un autre but de l'invention est de proposer un système d'assistance permettant à une ou plusieurs personnes qui pressentent qu'elles devront fuir un pays où elles résident de constituer à l'avance, de façon sécurisée et authentifiable, un dossier de preuves qui permettra d'attester de leur présence en des lieux et à des dates donnés.

Un autre but de l'invention est de proposer un système permettant à un pays d'accueil de vérifier des informations de lieux et de dates, à partir de données de preuves dont l'intégrité est garantie.

Ainsi, selon un aspect, l'invention propose un procédé d'assistance à la vérification du parcours qu'a pu avoir une personne avant son arrivée dans un pays d'accueil,
dans lequel on met en œuvre, dans un lieu géographique où se trouve la personne à un moment de son parcours,
- une acquisition de données biométriques et un chargement ou une acquisition d'autres données en les associant à ces données biométriques, ces autres données comportant au moins une information se rapportant à la localisation de la personne à ce moment de son parcours,
- une transmission sécurisée de ces données à un serveur de stockage à distance.

Lors de la vérification ultérieure du parcours de la personne, une unité de calcul traite les données mémorisées dans le serveur de stockage pour ladite personne et met en œuvre sur celles-ci :
- une authentification et/ou identification de la personne avec les données biométriques mémorisées,
- un traitement des données associées aux données biométriques adapté à la vérification sur ces données d'une information sur le lieu où ces données auraient été chargées ou acquises.

Ce procédé est avantageusement complété par les différentes caractéristiques suivantes prises seules ou selon leurs combinaisons techniquement possibles :
- on met en œuvre, lors de l'acquisition ou du chargement des données, une acquisition de données de localisation satellitaire ;
- lors de l'acquisition ou du chargement des données, une interface d'échanges donne instruction à la personne d'acquérir au moins une image du site où elle se trouve ou d'un site ou d'éléments caractéristiques à proximité ;
- l'interface donne instruction à la personne de se faire apparaître sur la ou les images qu'elle acquiert ;
- lors de la vérification ultérieure du parcours de la personne, la ou les images sont traitées pour vérifier automatiquement la cohérence de cette ou ces images avec le lieu où les données auraient été chargées ou acquises ;
- l'interface donne instruction à la personne de faire un mouvement particulier en même temps qu'elle acquiert des images vidéo ;
- lors de la vérification ultérieure du parcours de la personne, ces images vidéo ou des informations d'accéléromètres transmises avec celles-ci sont traitées lors du traitement de vérification du parcours de la personne pour vérifier automatiquement la cohérence de ces images ou de ces informations d'accéléromètres avec le mouvement demandé ;
- l'interface donne instruction à la personne d'acquérir une image de ciel étoilé et/ou d'acquérir une image de ciel sur laquelle apparaîtrait au moins un avion de ligne ou au moins une traînée blanche d'avion de ligne ;
- lors de la vérification ultérieure du parcours de la personne, cette image est traitée pour vérifier la cohérence de cette image avec une localisation et/ou une date auxquelles cette image aurait été prise ;
- le serveur de stockage à distance consolide dans un même dossier les données reçues d'une même personne à plusieurs moments différents de son parcours.

Selon un autre aspect encore, l'invention concerne également un système pour la mise en œuvre d'un tel procédé d'assistance, comportant
- au moins un dispositif adapté pour mettre en œuvre une acquisition de données biométriques et pour charger ou acquérir d'autres données en les associant à ces données biométriques, ces autres données comportant au moins une information se rapportant à la localisation de la personne à ce moment de son parcours,
- un serveur de stockage à distance auquel le dispositif d'acquisition peut transmettre ces différentes données,
- une unité de calcul adaptée pour traiter les données mémorisées dans le serveur de stockage en mettant en œuvre sur celles-ci :
- une authentification et/ou identification de la personne avec les données biométriques mémorisées,
- un traitement des données associées aux données biométriques adapté à la vérification sur ces données d'une information sur le lieu où ces données auraient été chargées ou acquises.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique illustrant le principe général de l'invention ;
- la figure 2 illustre différentes étapes d'acquisition et de chargement de données en un lieu et à une date donnés ;
- la figure 3 illustre différentes étapes mises en œuvre à la réception des données par le serveur de stockage ;
- la figure 4 illustre différentes étapes mises en œuvre lors de la vérification du dossier d'une personne.

### DESCRIPTION D'UN OU PLUSIEURS MODES DE MISE EN ŒUVRE ET DE RÉALISATION

### Système d'assistance

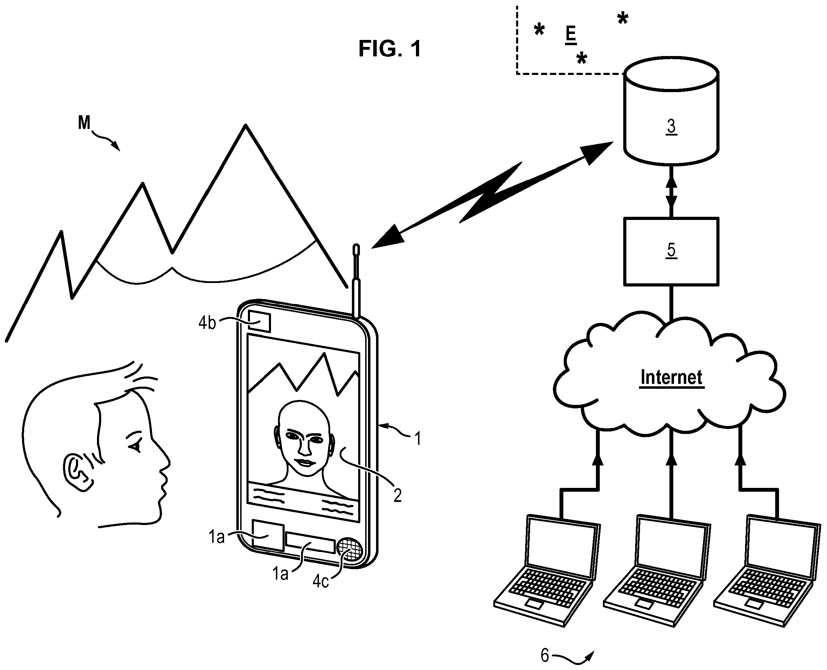

Le système d'assistance illustré sur la figure 1 permet à un ou plusieurs individus qui pressentent qu'ils devront fuir la zone géographique où ils se trouvent, de collecter et sécuriser des données et d'attester de leur présence en des lieux et à des dates donnés.

A cet effet, dans un mode de réalisation, le système utilise des terminaux mobiles 1 du type de ceux en circulation dans la plupart des régions du monde (téléphones portables de type « smartphone », tablettes, etc.).

Ces terminaux mobiles 1 sont munis d'au moins une application la logiciel dédiée. Celle-ci gère au moins une interface 2 pour des échanges avec l'utilisateur. Elle commande en outre la transmission d'informations à un ou plusieurs serveurs sécurisés 3 à distance (serveurs situés dans des pays d'accueil). Cette transmission peut se faire de différentes façons selon les modes de communication accessibles dans la zone géographique où se trouvent les terminaux mobiles (communication satellitaire, par exemple).

En variante, il peut être prévu d'utiliser non pas des terminaux mobiles du type de ceux précités, mais des dispositifs d'acquisition dédiés que l'on confie à des tiers de confiance : organisation supranationale (type ONU, PNUD, etc.), organisations non gouvernementales (ONG), etc.

Ces dispositifs présentent une architecture hardware et des moyens de sécurisation spécifiques.

Ils sont durcis pour présenter une forte résistance aux chocs, aux écarts de température, à l'humidité ou à la poussière.

L'utilisation de ces dispositifs dédiés confiés à des organismes tiers de confiance confèrent aux données collectées une plus grande garantie d'intégrité.

### Capture de données biométriques et premières vérifications

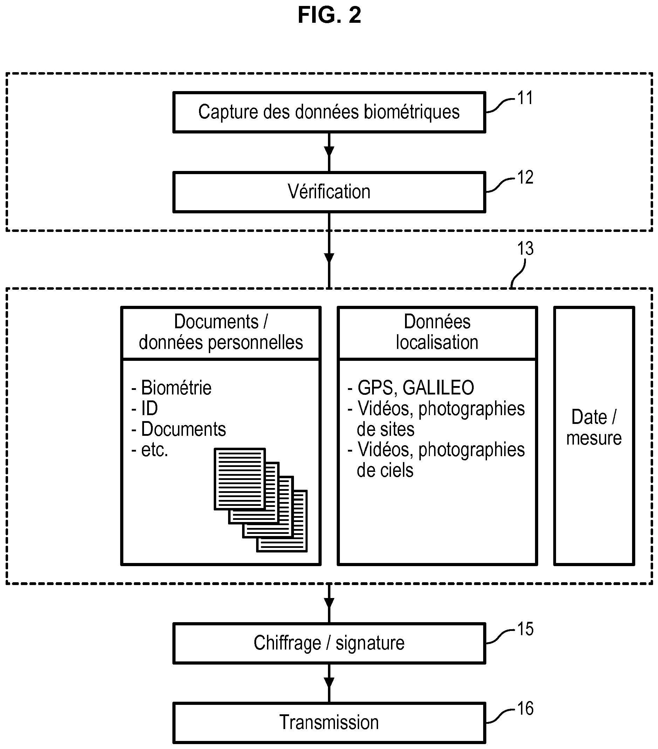

Un traitement de collecte d'informations que l'on associe à un lieu et une date donnés se fait en mettant en œuvre les étapes suivantes (figure 2).

A l'aide d'un tel terminal mobile 1 ou d'un tel dispositif dédié, un individu qui cherche à sécuriser des éléments le concernant capture une/des données biométriques (étape 11).

Le terminal mobile 1 est à cet effet équipé d'un ou plusieurs capteurs et de traitements logiciels associés permettant une lecture de données biométriques : capteur 4a d'acquisition d'empreintes digitales, caméra 4b associée à un traitement de lecture de caractéristiques faciales ou à un traitement d'analyse d'images d'iris, microphone 4 associé à un traitement d'analyse de voix, capteur de lecture de réseaux veineux, etc.

L'application la sur le terminal mobile 1 ou le dispositif dédié vérifie alors que la donnée biométrique est bien réelle (étape 12).

Par exemple, si le terminal 1 acquiert des caractéristiques de reconnaissance faciale au moyen d'un capteur d'images, le traitement met en œuvre une vérification de ce que l'individu qui apparait sur la photo n'a pas été remplacé par une image plate (détection de bords carrés ou autre technique par exemple).

Egalement, l'application la sur le terminal mobile 1 ou le dispositif dédié peut solliciter l'individu, via l'interface 2, afin qu'il fasse un mouvement particulier.

Des accéléromètres sur le terminal mobile 1 ou le dispositif dédié relèvent les signaux d'accélération sur celui-ci et un traitement est mis en œuvre sur ces signaux par ledit terminal ou dispositif afin de vérifier la cohérence de ces signaux avec le mouvement demandé.

En variante encore, l'application la sur le terminal mobile 1 ou le dispositif dédié peut solliciter l'individu pour qu'il prenne une vidéo de son visage en tournant autour de celui-ci.

Les images vidéo ainsi obtenues sont traitées par l'application la ou le dispositif afin de vérifier que la personne n'a pas présenté une image plate.

L'individu peut en outre capturer un de ses traits biométriques en compagnie d'une autre personne (i.e. ces deux personnes capturent leurs données au même moment sur le même capteur) pour établir que ces deux personnes se trouvaient au même endroit et au même moment.

Si cette autre personne est aussi migrante, cela permet de lier deux parcours.

Si cette autre personne est, par exemple, membre d'une ONG ou journaliste, cela permet d'établir plus facilement le parcours de la personne migrante.

### Constitution d'un dossier associant des fichiers / dates / données de localisation

Une fois cette vérification faite, la personne charge tout fichier qu'elle juge utile (étape 13) : données alphanumériques, photographies (le cas échéant prises par le terminal mobile ou le dispositif dédié), documents numérisés.

Ces documents et données peuvent être de natures très diverses :
- données biométriques acquises lors de l'étape 11 ;
- informations sur l'identité de la personne ;
- copie de passeports ou de documents officiels sur lesquels la personne est identifiée ;
- copie de titres de propriété ;
- et plus généralement tout document que la personne pourrait juger utile dans un pays d'accueil.

Ces différents documents et ces différentes données peuvent concerner la personne en question ou d'autres personnes avec lesquelles elle est en lien, notamment des enfants.

Une fois ces différents fichiers chargés, l'application la du terminal mobile 1 ou le dispositif dédié complète le dossier constitué avec des informations de localisation et de date (étape 14).

Les données de date sont par exemple fournies par le terminal mobile 1 ou le dispositif dédié.

En variante, elles peuvent être entrées sur le dispositif dédié par le tiers de confiance, lequel se sera préalablement authentifié.

En variante encore, lorsqu'une communication est possible avec un des serveurs 3, l'information de date peut être fournie par le serveur selon un format permettant de l'authentifier avec certitude au niveau du terminal 1 ou du dispositif dédié. Dans cette hypothèse encore, l'information de date peut être associée aux données et documents par le serveur 3 lui-même, au moment où il reçoit ces données, et non pas au niveau du téléphone portable 1 ou du dispositif dédié.

Les données de localisation peuvent être issues de géopositionnement par satellites (GPS, Galileo ou tout autre système qui serait disponible).

En complément ou pour les zones où les signaux satellitaires ne passeraient pas (régions montagneuses par exemple), l'application la ou le dispositif dédié peuvent demander à la personne de prendre une photo ou une vidéo d'éléments de paysage (chaîne de montagnes M dans l'exemple de la figure 1), de bâtiments ou de monuments caractéristiques de la zone géographique, etc., et plus généralement de tout site aisément identifiable et qui se trouverait à proximité de la personne.

Par exemple, il peut être prévu que l'application la ou le dispositif dédié demande à la personne d'indiquer approximativement où elle se trouve et, en fonction de la réponse, lui renvoie une liste de suggestions de sites, bâtiments, monuments que la personne pourrait prendre en photos à proximité.

Cette liste de suggestion est par exemple fournie par un serveur 3 interrogé à distance par l'application la ou le dispositif dédié.

Si aucune communication à distance n'est possible, il peut être prévu que l'application la ou le dispositif dédié demande à l'utilisateur de choisir par lui-même un site de référence à proximité.

Dans tous les cas, les instructions données par l'application la ou le dispositif dédié à l'utilisateur sont de se faire apparaitre sur l'image ou la vidéo qu'il acquiert de ce site de référence.

Egalement, à des fins de vérification ultérieure, l'application la ou le dispositif dédié peuvent donner pour instruction à la personne de faire un mouvement particulier en même temps qu'elle acquiert une vidéo : travelling, rotation de 360° autour d'elle-même, mouvement de va-et-vient dans un sens ou un autre, etc.

Les mouvements d'images sur la vidéo ou les données d'accéléromètres le cas échéant associées à ladite vidéo sont ultérieurement traités pour vérification de cohérence, lors du traitement du dossier dans le pays d'accueil, à l'occasion d'une demande d'éligibilité.

Egalement encore, en complément - ou pour le cas où un dispositif de géolocalisation ne serait pas disponible (ou ne permettrait pas une information suffisamment fiable), l'application la ou le dispositif dédié peuvent demander à l'individu de prendre, de nuit, une photographie ou une vidéo du ciel s'il apparait suffisamment clair (ciel étoilé).

Lors du traitement du dossier dans le pays d'accueil, cette image est traitée pour vérifier la cohérence des informations de localisation ou de date figurant dans le dossier ou indiquées ultérieurement par la personne avec la configuration de points fixes astronomiques E figurant sur l'image.

Egalement encore, toujours en complément - ou pour le cas où un dispositif de géolocalisation ne serait pas disponible (ou ne permettrait pas une information suffisamment fiable), l'application la ou le dispositif dédié peuvent demander à l'individu de prendre une photographie ou une vidéo du ciel au moment du passage d'avions de lignes ou si celui-ci comporte des traces (traînées blanches) de leurs passages.

Là aussi, cette image est traitée lors de la vérification du dossier dans le pays d'accueil, afin de vérifier la cohérence des informations de localisation ou de date figurant dans le dossier ou indiquées par la personne avec les informations relatives aux passages d'avions de lignes au-dessus de la zone géographique correspondant à la localisation indiquée, à la date en question.

### Transmission et stockage dans un serveur à distance

Dans des étapes suivantes, l'application la chiffre et signe les données (étape 15) et les transmet (étape 16) à un serveur de stockage sécurisé 3 situé à distance, par exemple dans un pays d'accueil.

Ce chiffrement est destiné à éviter toute interception qui amènerait à identifier l'individu qui utilise le système proposé.

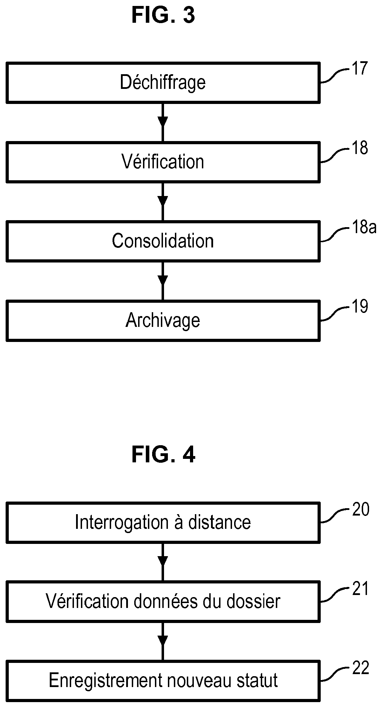

A réception, le serveur 3 déchiffre les données (étape 17). Il vérifie leur intégrité (étape 18) et les archive (étape 19) (figure 3).

Notamment, dans l'étape 18, il vérifie la signature du flux reçu et vérifie la cohérence de l'information de date qui lui est fournie par rapport à la date de réception dont il dispose.

On notera que cette date de réception peut être légèrement postérieure à la date qui aura été indiquée par la personne au moment où elle chargeait les données, notamment dans le cas où la personne se trouvait alors dans une zone ne permettant pas une transmission.

Des règles d'acceptation permettent de valider ou non la cohérence de la date fournie avec le dossier par rapport à la date de réception par le serveur.

Par ailleurs, lorsque la personne utilise un dispositif dédié, le flux de données reçu peut être authentifié grâce à des informations d'identification de l'appareil récupérées par l'application la dans les couches « hardware » dudit dispositif et transmise avec le flux de données.

Ces données ont été préalablement mémorisées par le serveur 3, à la mise en service du dispositif dédié.

En outre, le serveur 3 consolide dans le temps dans un même dossier les données reçues d'une même personne à plusieurs instants différents (étape 18a avant l'étape d'archivage 19).

La personne qui a chargé des données peut en effet renouveler son pointage de localisation à d'autres moments de son parcours.

Les étapes précédemment décrites sont alors renouvelées autant que nécessaire.

Egalement, la personne peut aussi supprimer (ou pas) un enregistrement à l'aide de sa/ses donnée(s) biométrique(s).

Par ailleurs, les différentes transactions réalisées avec le serveur 3 peuvent aussi être enregistrées dans la « blockchain ».

### Traitement lors d'une demande d'éligibilité (figure 4)

Lors d'une demande d'éligibilité à un statut particulier dans un pays d'accueil, le serveur 3 peut être interrogé par un ou plusieurs organismes ayant les droits d'accès (terminaux 6) (étape 20).

Lors d'une telle interrogation, une unité de calcul 5 met en œuvre sur les données collectées du dossier de la personne un traitement de vérification complet (étape 21).

Notamment, les données biométriques qui se trouvent au dossier sont comparées aux données biométriques acquises sur la personne par l'organisme qui est sollicité lorsque cette personne formule sa demande d'éligibilité auprès de lui.

Egalement, les différentes images figurant au dossier et destinées à permettre de vérifier une localisation à une date donnée sont traitées :
- traitement des images de sites caractéristiques pour vérifier automatiquement qu'elles correspondent à la localisation annoncée ;
- traitement de ces images pour vérifier que la personne y apparait et a bien effectué les mouvements qui lui était demandé par l'application la ou le dispositif dédié au moment de l'acquisition et ainsi valider que les images transmises n'étaient pas des montages ;
- traitement des signaux d'accéléromètres associés ;
- traitement des images de ciel étoilé afin de vérifier la cohérence entre la configuration de points fixes astronomiques E figurant sur ces images et la localisation et la date auxquelles elles sont censées avoir été prises ;
- traitement des images de ciel sur lesquelles apparaîtraient des avions de lignes ou des trainées blanches suite à leur passage afin de vérifier la cohérence de ces images avec la localisation et la date auxquelles elles sont censées avoir été prises ;
- etc.

Ainsi, le dossier préalablement constitué et transmis au serveur 3 permet à la personne de prouver son passage en différents points géographiques à des dates données.

Les documents complémentaires fournis viennent en outre compléter ces informations de parcours.

Il devient ainsi facile de reconstituer son historique de vie et de statuer en un temps bref, sans suspicion, sur l'éligibilité en totalité ou partie de sa demande de droit.

In fine, l'enregistrement dans le serveur 3 est mis à jour avec le nouveau statut de la personne.

## Revendications

1. Procédé d'assistance à la vérification du parcours qu'a pu avoir une personne avant son arrivée dans un pays d'accueil,
dans lequel on met en œuvre, dans un lieu géographique où se trouve la personne à un moment de son parcours,
- une acquisition de données biométriques et une acquisition d'autres données en les associant à ces données biométriques, ces autres données comportant au moins une information se rapportant à la localisation de la personne à ce moment de son parcours,
- une transmission sécurisée de ces différentes données à un serveur de stockage à distance, et dans lequel, lors de la vérification ultérieure du parcours de la personne, une unité de calcul traite les données mémorisées dans le serveur de stockage pour ladite personne et met en œuvre sur celles-ci :
- une authentification et/ou identification de la personne avec les données biométriques mémorisées,
**caractérisé en ce que** lors de l'acquisition ou de la transmission des données, une interface d'échanges donne instruction à la personne d'acquérir au moins une image d'un site de référence ou d'éléments caractéristiques à proximité du site d'acquisition et **en ce que** lors de la vérification ultérieure du parcours de la personne, la ou les images sont traitées pour vérifier automatiquement la cohérence de cette ou ces images avec la au moins une information se rapportant à la localisation de la personne au moment de l'acquisition.

2. Procédé selon la revendication 1, dans lequel on met en œuvre, lors de l'acquisition ou du chargement des données, une acquisition de données de localisation satellitaire.

3. Procédé selon la revendication 1, dans lequel l'interface donne instruction à la personne de se faire apparaître sur la ou les images qu'elle acquiert.

4. Procédé selon la revendication 1, dans lequel l'interface donne instruction à la personne de faire un mouvement particulier en même temps qu'elle acquiert des images vidéo.

5. Procédé selon la revendication 1 prise en combinaison avec la revendication 4, dans lequel, lors de la vérification ultérieure du parcours de la personne, ces images vidéo ou des informations d'accéléromètres transmises avec celles-ci sont traitées lors du traitement de vérification du parcours de la personne pour vérifier automatiquement la cohérence de ces images ou de ces informations d'accéléromètres avec le mouvement demandé.

6. Procédé selon la revendication 1, dans lequel l'interface donne instruction à la personne d'acquérir une image de ciel étoilé et/ou d'acquérir une image de ciel sur laquelle apparaîtrait au moins un avion de ligne ou au moins une traînée blanche d'avion de ligne.

7. Procédé selon la revendication 6, dans lequel, lors de la vérification ultérieure du parcours de la personne, cette image est traitée pour vérifier la cohérence de cette image avec une localisation et/ou une date auxquelles cette image aurait été prise.

8. Procédé selon la revendication 1, dans lequel le serveur de stockage à distance consolide dans un même dossier les données reçues d'une même personne à plusieurs moments différents de son parcours.

9. Système pour la mise en œuvre d'un procédé d'assistance selon l'une des revendications précédentes, comportant :
- au moins un dispositif adapté pour mettre en œuvre une acquisition de données biométriques et acquérir d'autres données en les associant à ces données biométriques, ces autres données comportant au moins une information se rapportant à la localisation de la personne au moment de l'acquisition, le dispositif comprenant une interface d'échange adapté pour donner instruction à la personne d'acquérir au moins une image d'un site de référence ou d'éléments caractéristiques à proximité du site d'acquisition
- un serveur de stockage à distance auquel le dispositif d'acquisition peut transmettre ces différentes données de manière sécurisée,
- une unité de calcul adaptée pour traiter les données mémorisées dans le serveur de stockage en mettant en œuvre sur celles-ci :
- une authentification et/ou identification de la personne avec les données biométriques mémorisées,
- un traitement de vérification automatique de la cohérence de la ou des images avec la au moins une information se rapportant à la localisation de la personne au moment de l'acquisition.

## Patentansprüche

1. Assistenzverfahren zur Überprüfung der Route, die eine Person vor ihrer Ankunft in einem Gastland zurückgelegt haben kann,
wobei an einem geografischen Ort, an dem sich die Person zu einem bestimmten Zeitpunkt auf ihrer Route befindet, Folgendes durchgeführt wird:
- eine Erfassung biometrischer Daten und eine Erfassung weiterer Daten durch Verknüpfung mit den biometrischen Daten, wobei die weiteren Daten mindestens eine Information umfassen, die sich auf die Lokalisierung der Person zu diesem Zeitpunkt ihrer Route bezieht,
- eine sichere Übertragung der verschiedenen Daten an einen entfernten Speicherserver, und wobei bei der späteren Überprüfung der Route der Person eine Recheneinheit die in dem Speicherserver für die Person gespeicherten Daten verarbeitet und an diesen durchführt:
- eine Authentifizierung und/oder Identifizierung der Person mit den gespeicherten biometrischen Daten, **dadurch gekennzeichnet, dass** bei der Erfassung oder der Übertragung der Daten eine Austauschschnittstelle die Person anweist, mindestens ein Bild eines Referenzstandorts oder charakteristischer Elemente in der Nähe des Erfassungsstandorts zu erfassen, und dadurch, dass bei der späteren Überprüfung der Route der Person das Bild oder die Bilder verarbeitet werden, um automatisch die Kohärenz dieses Bildes oder dieser Bilder mit der mindestens einen Information zu überprüfen, die sich auf die Lokalisierung der Person zum Zeitpunkt der Erfassung bezieht.

2. Verfahren nach Anspruch 1, wobei bei der Erfassung oder beim Laden der Daten eine Erfassung von Satellitenlokalisierungsdaten durchgeführt wird.

3. Verfahren nach Anspruch 1, wobei die Schnittstelle die Person anweist, sich auf dem Bild oder den Bildern, die sie erfasst, zu zeigen.

4. Verfahren nach Anspruch 1, wobei die Schnittstelle die Person anweist, eine bestimmte Bewegung auszuführen, während sie gleichzeitig Videobilder erfasst.

5. Verfahren nach Anspruch 1 in Kombination mit Anspruch 4, wobei bei der späteren Überprüfung der Route der Person die Videobilder oder damit übertragene Beschleunigungsmesserinformationen bei der Verarbeitung zur Überprüfung der Route der Person verarbeitet werden, um automatisch zu überprüfen, ob diese Bilder oder Beschleunigungsmesserinformationen mit der angeforderten Bewegung kohärent sind.

6. Verfahren nach Anspruch 1, wobei die Schnittstelle die Person anweist, ein Bild des Sternenhimmels zu erfassen und/oder ein Bild des Himmels zu erfassen, auf dem mindestens ein Linienflugzeug oder mindestens ein weißer Streifen eines Linienflugzeugs zu sehen wäre.

7. Verfahren nach Anspruch 6, wobei bei der späteren Überprüfung der Route der Person das Bild verarbeitet wird, um die Kohärenz des Bildes mit einer Lokalisierung und/oder einem Datum zu überprüfen, an denen das Bild aufgenommen worden wäre.

8. Verfahren nach Anspruch 1, wobei der entfernte Speicherserver die Daten, die er von ein und derselben Person zu mehreren verschiedenen Zeitpunkten ihrer Route empfangen hat, in einem einzigen Ordner konsolidiert.

9. System zur Durchführung eines Assistenzverfahrens nach einem der vorstehenden Ansprüche, umfassend:
- mindestens eine Vorrichtung, die dazu ausgelegt ist, eine Erfassung biometrischer Daten durchzuführen und weitere Daten durch Verknüpfung mit den biometrischen Daten zu erfassen, wobei die weiteren Daten mindestens eine Information umfassen, die sich auf die Lokalisierung der Person zum Zeitpunkt der Erfassung bezieht, wobei die Vorrichtung eine Austauschschnittstelle umfasst, die dazu ausgelegt ist, die Person anzuweisen, mindestens ein Bild eines Referenzstandorts oder charakteristischer Elemente in der Nähe des Erfassungsstandorts zu erfassen
- einen entfernten Speicherserver, an den die Erfassungsvorrichtung die verschiedenen Daten sicher übertragen kann,
- eine Recheneinheit, die dazu ausgelegt ist, die im Speicherserver gespeicherten Daten zu verarbeiten, indem an ihnen Folgendes durchgeführt wird:
- eine Authentifizierung und/oder Identifizierung der Person mit den gespeicherten biometrischen Daten,
- eine Verarbeitung zur automatischen Überprüfung der Kohärenz des Bildes oder der Bilder mit der mindestens einen Information, die sich auf die Lokalisierung der Person zum Zeitpunkt der Erfassung bezieht.

## Claims

1. A method for assisting in the verification of the journey a person may have taken before arriving in a host country,
wherein the following is performed in a geographical place where the person is located at a time of their journey,
- an acquisition of biometric data and an acquisition of other data by associating them with these biometric data, these other data comprising at least one piece of information relating to the location of the person at that time of their journey,
- a secure transmission of these various data to a remote storage server, and wherein, during a subsequent verification of the person's journey, a computing unit processes the data stored in the storage server for said person and performs on them:
- an authentication and/or identification of the person with the stored biometric data, **characterized in that** during the acquisition or transmission of the data, an exchange interface instructs the person to acquire at least one image of a reference site or of characteristic elements in the vicinity of the acquisition site, and **in that** during the subsequent verification of the person's journey, the image or images are processed to automatically verify the consistency of this or these images with the at least one piece of information relating to the location of the person at the time of the acquisition.

2. The method according to claim 1, wherein during the acquisition or loading of the data, an acquisition of satellite location data is performed.

3. The method according to claim 1, wherein the interface instructs the person to appear in the image or images it is acquiring.

4. The method according to claim 1, wherein the interface instructs the person to make a particular movement at the same time as it acquires video images.

5. The method according to claim 1 taken in combination with claim 4, wherein, during the subsequent verification of the person's journey, these video images or accelerometer information transmitted with them are processed during the processing to verify the person's journey in order to automatically verify the consistency of these images or this accelerometer information with the requested movement.

6. The method according to claim 1, wherein the interface instructs the person to acquire an image of the starry sky and/or to acquire an image of the sky in which at least one airliner or at least one airliner contrail would appear.

7. The method according to claim 6, wherein, during the subsequent verification of the person's journey, this image is processed to verify the consistency of this image with a location and/or date at which this image would have been taken.

8. The method according to claim 1, wherein the remote storage server consolidates the data received from the same person at several different times in their journey into a single file.

9. A system for performing an assistance method according to one of the preceding claims, comprising:
- at least one device suitable for performing an acquisition of biometric data and for acquiring other data by associating them with these biometric data, these other data including at least one piece of information relating to the location of the person at the time of the acquisition, the device comprising an exchange interface suitable for instructing the person to acquire at least one image of a reference site or of characteristic elements in the vicinity of the acquisition site
- a remote storage server to which the acquisition device can transmit these various data in a secure manner,
- a computing unit suitable for processing the data stored in the storage server by performing on same:
- an authentication and/or identification of the person with the stored biometric data,
- a process for automatically verifying the consistency of the image or images with the at least one piece of information relating to the location of the person at the time of the acquisition.
